# EUROPEAN PATENT APPLICATION

(11) **EP 4 481 568 A1**
(43) Date of publication of application: **25.12.2024**
(21) Application number: 24182578.5
(22) Date of filing: 17.06.2024
(51) Int. Cl.: G06F 9/50

(54) **DEVICE FOR SHARING COMPUTING RESOURCES IN WIRELESS COMMUNICATION SYSTEM AND OPERATING METHOD THEREOF**

(30) Priority: 23.06.2023 KR 20230081333; 25.09.2023 KR 20230128491
(71) Applicant: Samsung Electronics Co., Ltd., Suwon-si, Gyeonggi-do 16677 (KR)
(72) Inventor: CHONG, Dahae, 16677 Suwon-si (KR); KIM, Mingoo, 16677 Suwon-si (KR); KIM, Jinho, 16677 Suwon-si (KR); DO, Joohyun, 16677 Suwon-si (KR); LEE, Jungwon, 16677 Suwon-si (KR); JE, Huiwon, 16677 Suwon-si (KR); CHOI, Yongin, 16677 Suwon-si (KR)
(74) Representative: Marks & Clerk LLP

(57) **Abstract**

A user equipment includes: a communication circuit configured to perform a communication connection with an external electronic device; at least one processor; and a memory configured to store instructions executed during operations of the at least one processor, wherein the at least one processor is configured to: control the communication circuit to transmit, to the external electronic device, device information related to a first target task of the user equipment; and in response to receiving, from the external electronic device, first result data generated by using computing resources of the external electronic device, perform the first target task, based on the first result data, and wherein the first result data is generated based on the device information allocated to the computing resources of the external electronic device.

## Description

### BACKGROUND

The disclosure relates to a device for sharing computing resources in a wireless communication system, and an operation thereof.

Recently, based on an increased amount of wireless data traffic following commercialization of wireless communication systems, a base station and a user equipment may perform various data processing tasks to improve or optimize the performance of each device.

However, compared to the base station, the user equipment may have limitations in using a data processing operation that requires a large amount of computation, due to limited computing resources in the user equipment. For example, in a case of an online learning-based data processing operation that requires collecting and processing data in real time, data may not be properly processed by the user equipment using only idle computing resources in the user equipment. Even when data may be processed by using the idle computing resources in the user equipment, such processing may accelerate battery power consumption of the user equipment, and thus, may only be used in a very limited manner.

### SUMMARY

Provided are an electronic device, in which target tasks based on various data processing operations may be performed through computing resource sharing between an external electronic device (e.g. a vehicle) and a user equipment, and an operating method thereof.

Provided are an electronic device, in which target tasks for improving device performance may be performed through information sharing between an external electronic device (e.g., a vehicle) and a user equipment, and an operating method thereof.

Embodiments of the disclosure are not limited to those mentioned above, and other objectives not mentioned will be clearly understood by those skilled in the art from the following description.

According to an aspect of the disclosure, a user equipment includes: a communication circuit configured to perform a communication connection with an external electronic device; at least one processor; and a memory configured to store instructions executed during operations of the at least one processor, wherein the at least one processor is configured to: control the communication circuit to transmit, to the external electronic device, device information related to a first target task of the user equipment; and in response to receiving, from the external electronic device, first result data generated by using computing resources of the external electronic device, perform the first target task, based on the first result data, and wherein the first result data is generated based on the device information allocated to the computing resources of the external electronic device. Performing a communication connection may comprise or be equivalent to communicating or being configured to communicate with an external electronic device, base station, and/or other entity.

According to an aspect of the disclosure, a method performed by a user equipment, includes: transmitting, to an external electronic device, device information related to a first target task of the user equipment; and in response to receiving, from the external electronic device, first result data generated by using computing resources of the external electronic device, performing the first target task, based on the first result data, wherein the first result data is generated based on the device information allocated to the computing resources of the external electronic device.

According to an aspect of the disclosure, a method performed by a wireless communication system, includes: transmitting, to an external electronic device, first data related to a target task of a user equipment; transmitting, to the user equipment, second data related to a target task of the external electronic device; performing the target task of the user equipment, based on first computation result data received from the external electronic device; and performing the target task of the external electronic device, based on second computation result data received from the user equipment, wherein the first computation result data is generated by using computing resources of the external electronic device, based on the first data, and wherein the second computation result data is generated by using computing resources of the user equipment, based on the second data.

At least some of the above and other features of the disclosure are set out in the claims.

### BRIEF DESCRIPTION OF DRAWINGS

Embodiments will be more clearly understood from the following detailed description taken in conjunction with the accompanying drawings in which:
FIG. 1 illustrates an example of a wireless communication system according to an embodiment;
FIG. 2 illustrates a user equipment according to an embodiment;
FIG. 3 illustrates a method of performing a target task based on computing resource sharing between a user equipment and an external electronic device, according to an embodiment;
FIG. 4 illustrates a method of performing a target task based on computing resource sharing between a user equipment and an external electronic device, according to an embodiment;
FIG. 5 illustrates a method of performing a target task based on computing resource sharing between a user equipment and an external electronic device, according to an embodiment;
FIG. 6 illustrates a method of performing a target task based on computing resource sharing between a user equipment and an external electronic device, according to an embodiment;
FIG. 7 illustrates a method of performing a target task based on information sharing between a user equipment and an external electronic device, according to an embodiment;
FIG. 8 illustrates an electronic device according to an embodiment; and
FIG. 9 illustrates electronic devices including computing resources, according to an embodiment.

### DETAILED DESCRIPTION

Hereinafter, embodiments will be described in detail with reference to the accompanying drawings.

The terms as used in the disclosure are provided to merely describe specific embodiments, not intended to limit the scope of other embodiments. Singular forms include plural referents unless the context clearly dictates otherwise. The terms and words as used herein, including technical or scientific terms, may have the same meanings as generally understood by those skilled in the art. The terms as generally defined in dictionaries may be interpreted as having the same or similar meanings as or to contextual meanings of the relevant art. Unless otherwise defined, the terms should not be interpreted as ideally or excessively formal meanings. Even though a term is defined in the disclosure, the term should not be interpreted as excluding embodiments of the disclosure under circumstances.

The term "couple" and the derivatives thereof refer to any direct or indirect communication between two or more elements, whether or not those elements are in physical contact with each other. The terms "transmit", "receive", and "communicate" as well as the derivatives thereof encompass both direct and indirect communication. The terms "include" and "comprise", and the derivatives thereof refer to inclusion without limitation. The term "or" is an inclusive term meaning "and/or". The phrase "associated with," as well as derivatives thereof, refer to include, be included within, interconnect with, contain, be contained within, connect to or with, couple to or with, be communicable with, cooperate with, interleave, juxtapose, be proximate to, be bound to or with, have, have a property of, have a relationship to or with, or the like. The term "controller" refers to any device, system, or part thereof that controls at least one operation. The functionality associated with any particular controller may be centralized or distributed, whether locally or remotely. The phrase "at least one of," when used with a list of items, means that different combinations of one or more of the listed items may be used, and only one item in the list may be needed. For example, "at least one of A, B, and C" includes any of the following combinations: A, B, C, A and B, A and C, B and C, and A and B and C, and any variations thereof. The expression "at least one of a, b, or c" may indicate only a, only b, only c, both a and b, both a and c, both b and c, all of a, b, and c, or variations thereof. Similarly, the term "set" means one or more. Accordingly, the set of items may be a single item or a collection of two or more items.

Moreover, multiple functions described below can be implemented or supported by one or more computer programs or computer program product, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as Read Only Memory (ROM), Random Access Memory (RAM), a hard disk drive, a Compact Disc (CD), a Digital Video Disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

In the disclosure, some of terms and names defined by the 3rd generation partnership project (3GPP) long term evolution (LTE) standard or the new radio (NR) standard are used. However, the disclosure is not limited to these terms and names, and may be equally applied to wireless communication systems conforming to other standards.

Hereinafter, description will be provided on the assumption that an external electronic device according to an embodiment is a vehicle, but embodiments of the disclosure are not limited thereto. Hereinafter, the external electronic device according to an embodiment may include various electronic devices capable of communication connection with a user equipment and including computing resources.

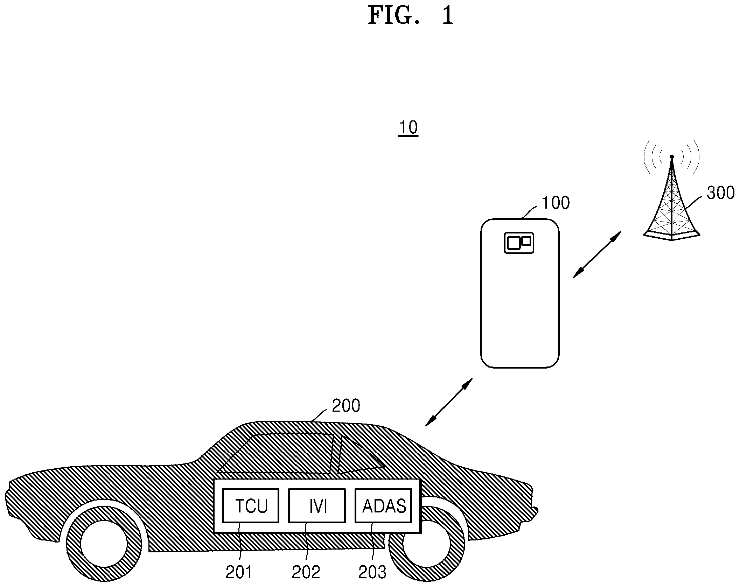

FIG. 1 illustrates an example of a wireless communication system 10 according to an embodiment.

Referring to FIG. 1, the wireless communication system 10 may include a user equipment 100, a vehicle 200, and a base station 300.

According to an embodiment, non-limiting examples of the wireless communication system 10 may include an NR system, a 5th generation (5G) system, an LTE system, a code division multiple access (CDMA) system, a global system for mobile communications (GSM) system, a wireless local area network (WLAN) system, or any other wireless communication system. Hereinafter, description will be provided on the assumption that the wireless communication system 10 is an NR system, an LTE system, or a system capable of supporting NR and LTE-based communication, but embodiments of the disclosure are not limited thereto.

The user equipment 100 according to an embodiment may be referred to as, for example, a user equipment, a mobile station (MS), a mobile terminal (MT), a user terminal, a subscribe station (SS), a wireless device, a handheld device, or the like.

The user equipment 100 according to an embodiment may support 4G communication (e.g., LTE or LTE-advanced (LTE-A)), 5G communication (e.g., NR), and the like defined by the 3GPP standard.

In an embodiment, for 4G communication and 5G communication, the user equipment 100 may support a CDMA-based communication protocol, a wideband CDMA (WCDMA)-based communication protocol, a time division multiple access (TDMA)-based communication protocol, a frequency division multiple access (FDMA)-based communication protocol, an orthogonal frequency division multiplexing (OFDM)-based communication protocol, a cyclic prefix (CP)-OFDM-based communication protocol, a discrete Fourier transform-spread-OFDM (DFT-s-OFDM)-based communication protocol, a non-orthogonal multiple access (NOMA)-based communication protocol, a generalized frequency division multiplexing (GFDM)-based communication protocol, and the like.

A computation processing device of the vehicle 200 according to an embodiment may include at least one of a telematic controller (TCU) 201, an in-vehicle infotainment (IVI) 202, and an advanced driver assistance system (ADAS) 203, and idle computing resources of the vehicle 200 may include idle computing resources in at least one of the above-described computation processing devices (e.g., the TCU 201, the IVI 202, or the ADAS 203). In FIG. 1, the idle computing resources of the vehicle 200 include idle computing resources of at least one of the TCU 201, the IVI 202, and the ADAS 203, but embodiments of the disclosure are not limited thereto. The idle computing resources of the vehicle 200 according to an embodiment may include idle computing resources in all computation processing devices or computation circuits that may be included in the vehicle 200.

In an embodiment, the user equipment 100 and the vehicle 200 may perform wired or wireless communication based on any one of 5G communication (NR) (e.g., FR1 band or FR2 band in 5G communication), 4G communication (LTE or LTE-A), ultra wideband (UWB), wireless fidelity (Wi-Fi), Bluetooth, and universal serial bus (USB), which allows high-speed data transmission between devices. The user equipment 100 and the vehicle 200 may share computing resources and/or device-specific information with each other based on the above-described communication connection.

In an embodiment, the user equipment 100 and the base station 300 may perform wireless communication by using any one of a terrestrial network and a non-terrestrial network.

The base station 300 according to an embodiment may refer to a fixed station that communicates with the user equipment 100 or other base stations. For example, the base station 300 may be referred to as a Node B, an evolved-Node B (eNB), a sector, a site, a base transceiver system (BTS), an access point, a relay node, a remote radio head (RRH), a radio unit (RU), or the like. For example, in the wireless communication system 10, the base station 300 includes at least one cell as the minimum unit of area for providing a communication service for each base station 300. The base station 300 may provide efficient multiple access communication for a plurality of user equipments, based on a specific frequency resource allocated to each cell. In particular, in the case of a multiple-input and multiple-output (MIMO) system, the user equipment 100 and the base station 300 may perform wireless communication based on a plurality of component carriers.

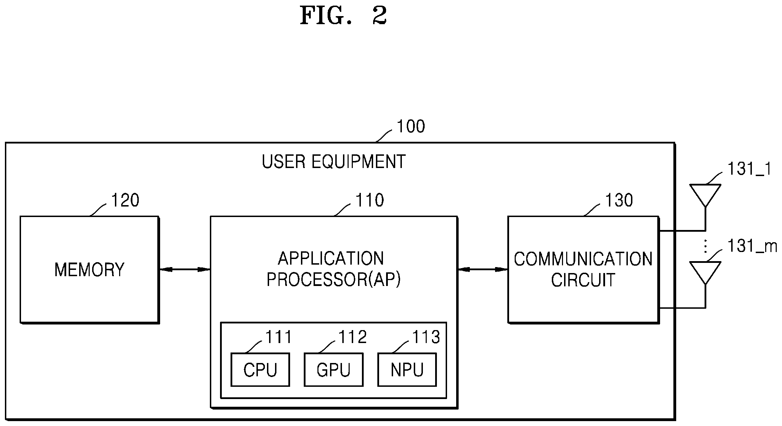

Provided are a user equipment, in which target tasks of the user equipment 100 that are based on various data processing methods (e.g., an online learning operation) may be performed by using computing resources of the vehicle 200, and an operating method thereof. This aspect will be described in detail below with reference to FIGS. 2 to 7. An online learning operation or task may comprise an operation or task related to machine learning. Such a task may relate to operation, and/or performance of the user equipment 100. Further an online learning operation or task may refer to an online machine learning operation or task and may comprise operation or task related to online machine learning, i.e., a method of machine learning in which data becomes available in a sequential order and is used to update a predictor in sequence.

FIG. 2 illustrates the user equipment 100 according to an embodiment. FIG. 2 is a block diagram illustrating the user equipment 100 according to an embodiment.

Referring to FIG. 2, the user equipment 100 may include an application processor (AP) 110, a memory 120, and a communication circuit 130 (e.g., a modem) that is electrically connected to a plurality of antennas (e.g., first to m-th antennas 131_1 to 131_m), wherein the AP 110 may include a central processing unit (CPU) 111, a graphics processing unit (GPU) 112, and a neural processing unit (NPU) 113 as internal computation processing devices, and idle computing resources of the user equipment 100 may include idle computing resources in at least one of the above-described computation processing devices. In FIG. 2, the idle computing resources of the user equipment 100 include idle computing resources of at least one of the CPU 111, the GPU 112, and the NPU 113, but embodiments of the disclosure are not limited thereto. The idle computing resources of the user equipment 100 according to an embodiment may include idle computing resources in all or at least some computation processing devices or computation circuits that may be included in the user equipment 100.

According to another embodiment, the AP 110 may be implemented as a logic block implemented through logic synthesis, a software block performed by a processor, or a combination thereof. In an embodiment, the AP 110 may be a procedure as a set of multiple instructions executed by a processor and may be stored in a memory accessible by the processor. In those embodiments, functions of the CPU 111, the GPU 112, and the NPU 113 (in the AP 110) may also be implemented as logic blocks implemented through logic synthesis.

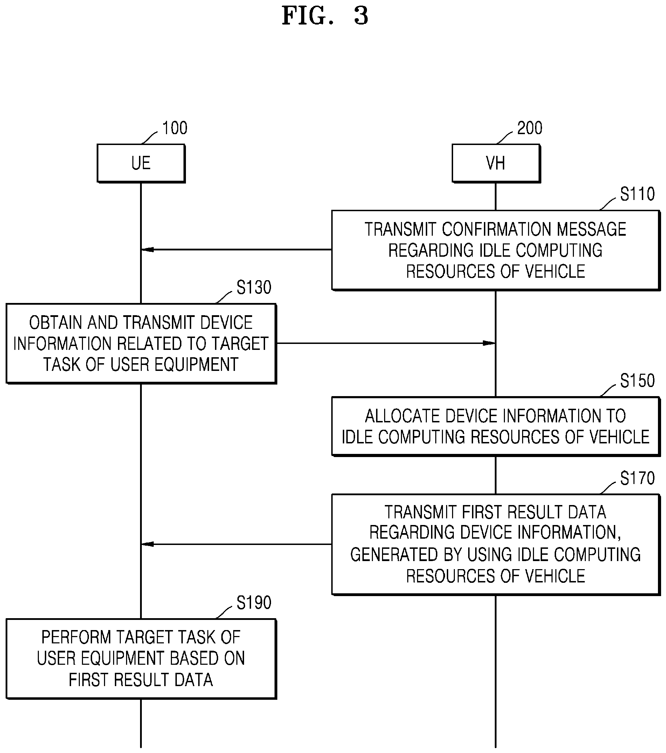

In an embodiment (shown in FIG. 3), the AP 110 may control the communication circuit 130 to transmit, to the vehicle 200 (in FIG. 1), device information related to a target task of the user equipment 100. In response to receiving, from the vehicle 200, first result data generated by using computing resources of the vehicle 200 (e.g., idle computing resources of the TCU 201 (in FIG. 1), the IVI 202 (in FIG. 1), or the ADAS 203 (in FIG. 1)), the AP 110 may perform the target task of the user equipment 100 based on the first result data. Herein, the target task of the user equipment 100 may be at least one computation task or data processing task performed by the user equipment 100 and may include an online learning task. This aspect of the disclosure will be described in detail below with reference to FIG. 3.

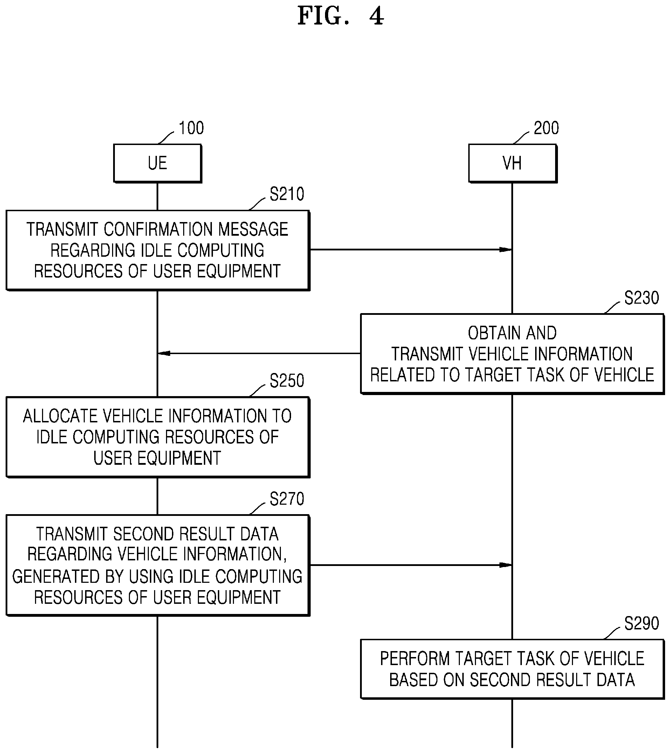

In an embodiment (shown in FIG. 4), the AP 110 may control the communication circuit 130 to receive, from the vehicle 200 (in FIG. 1), vehicle information related to a target task of the vehicle 200 and transmit, to the vehicle 200, second result data generated by using computing resources of the user equipment 100 (e.g., idle computing resources of the CPU 111, the GPU 112, or the NPU 113). In response to receiving the second result data, the vehicle 200 may perform the target task of the vehicle 200 based on the second result data. Herein, the target task of the vehicle 200 may be at least one computation task or data processing task performed by the vehicle 200 and may include an online learning task. This aspect of the disclosure will be described in detail below with reference to FIG. 4.

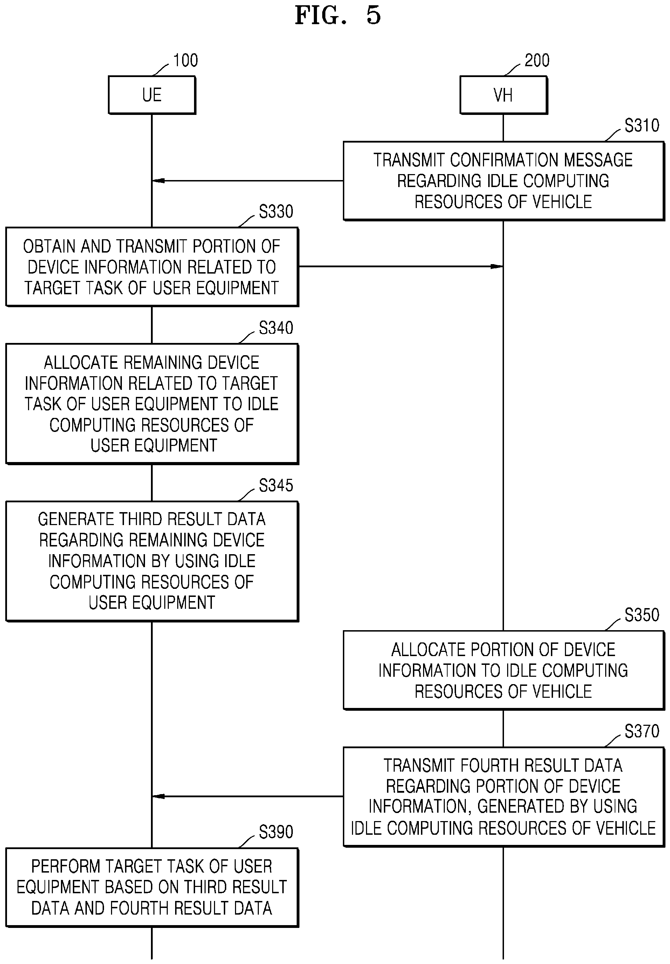

In an embodiment (shown in FIG. 5), the AP 110 may control the communication circuit 130 to transmit, to the vehicle 200 (in FIG. 1), a portion of the device information related to the target task of the user equipment 100 and may generate third result data regarding the remaining device information related to the target task by using the computing resources of the user equipment 100 (e.g., the idle computing resources of the CPU 111, the GPU 112, or the NPU 113). In response to receiving, from the vehicle 200, fourth result data generated by using the computing resources of the vehicle 200 (e.g., the idle computing resources of the TCU 201 (in FIG. 1), the IVI 202 (in FIG. 1), or the ADAS 203 (in FIG. 1)), the AP 110 may perform the target task of the user equipment 100 based on the third result data and the fourth result data. This aspect of the disclosure will be described in detail below with reference to FIG. 5.

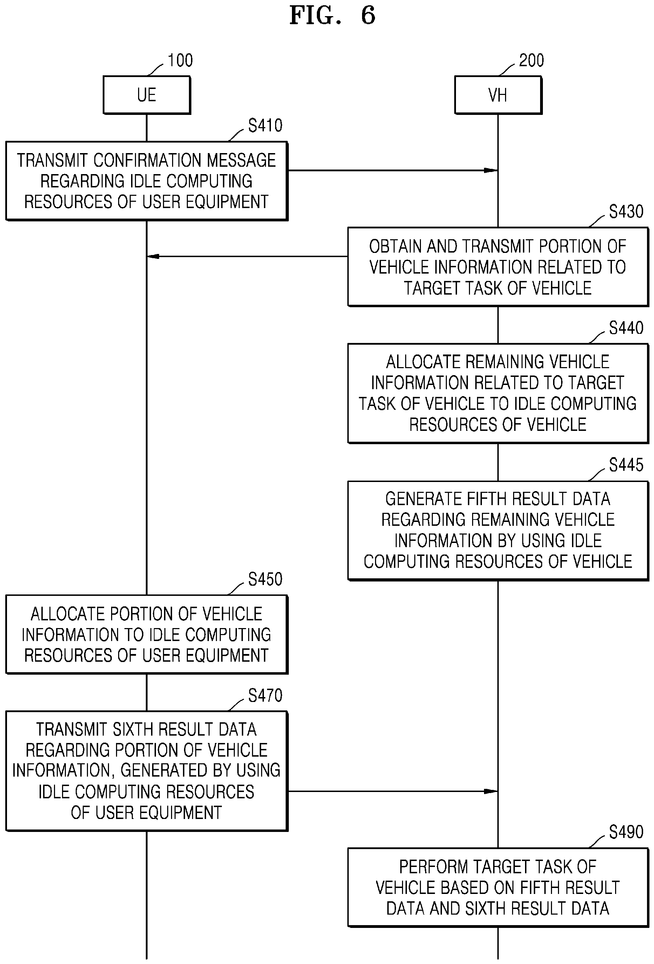

In an embodiment (shown in FIG. 6), the AP 110 may control the communication circuit 130 to receive, from the vehicle 200 (in FIG. 1), a portion of the vehicle information related to the target task of the vehicle 200 and may generate sixth result data regarding the portion of the vehicle information related to the target task of the vehicle 200 by using the computing resources of the user equipment 100 (e.g., the idle computing resources of the CPU 111, the GPU 112, or the NPU 113). The vehicle 200 may generate fifth result data regarding the remaining vehicle information related to the target task of the vehicle 200 by using the computing resources of the vehicle 200 (e.g., the idle computing resources of the TCU 201 (in FIG. 1), the IVI 202 (in FIG. 1), or the ADAS 203 (in FIG. 1)). In response to receiving the sixth result data from the user equipment 100, the vehicle 200 may perform the target task of the vehicle 200 based on the fifth result data and the sixth result data. This aspect of the disclosure will be described in detail below with reference to FIG. 6.

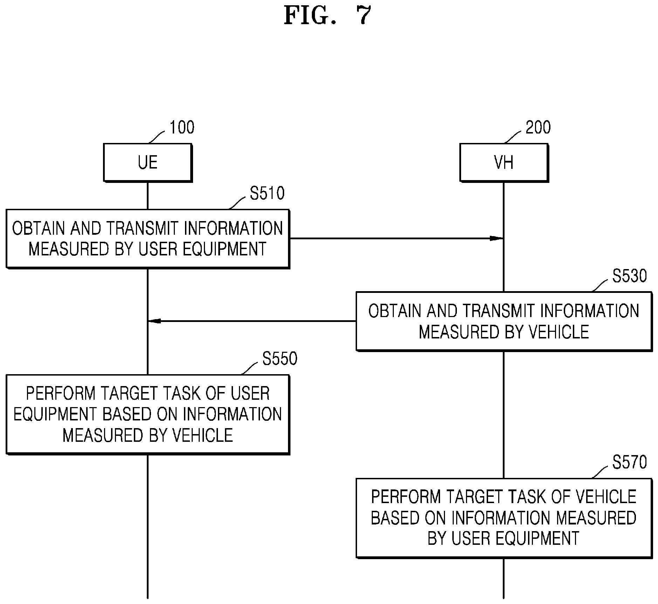

In an embodiment (shown in FIG. 7), the AP 110 may control the communication circuit 130 to transmit, to the vehicle 200 (in FIG. 1), device information measured by the user equipment 100 and receive, from the vehicle 200, vehicle information measured by the vehicle 200. The AP 110 may perform a target task for improving or optimizing the performance (e.g., data transmission/reception performance) of the user equipment 100, based on the vehicle information. This aspect of the disclosure will be described in detail below with reference to FIG. 7.

The communication circuit 130 of the user equipment 100 may perform wireless communication with the base station 300 (in FIG. 1) or the vehicle 200 by using a plurality of antennas (e.g., the first to m-th antennas 131_1 to 131_m). The communication circuit 130 may be configured to communicate wirelessly with the base station (in FIG. 1) and/or an external electronic device (e.g., the vehicle 200). The communication circuit 130 may communicate wirelessly with the base station (in FIG. 1) and/or an external electronic device (e.g., the vehicle 200). For example, the communication circuit 130 may transmit radio frequency (RF) signals to the base station 300 or the vehicle 200 through a serving cell. The communication circuit 130 may down-convert the RF signals received from the base station 300 to generate intermediate frequency or baseband signals. The AP 110 may generate data signals by filtering, decoding, and/or digitizing the intermediate frequency or baseband signals. The AP 110 may additionally process data signals transmitted/received to/from the base station 300.

Also, the communication circuit 130 may receive data signals from the AP 110. The communication circuit 130 may encode, multiplex, and/or analogize the received data signals. The communication circuit 130 may up-convert the intermediate frequency or baseband signals output from the AP 110 and transmit the same as RF signals to the base station 300 or the vehicle 200 through the first to m-th antennas 131_1 to 13 1_m. For example, the communication circuit 130 may transmit the device information measured by the user equipment 100 as RF signals to the vehicle 200 through the first to m-th antennas 131_1 to 131_m and may receive pieces of result data generated by the vehicle 200 as RF signals to the user equipment 100 through the first to m-th antennas 131_1 to 131_m. For example, the communication circuit 130 may transmit the device information measured by the user equipment 100 as RF signals to the vehicle 200 through the first to m-th antennas 131_1 to 13 1_m and may receive the vehicle information measured by the vehicle 200 as RF signals to the user equipment 100 through the first to m-th antennas 131_1 to 13 1_m.

The memory 120 may include an operating system and may include applications and/or process registers including device drivers, executable libraries, and/or program codes. The operating system and applications may be software elements and may be implemented by executing code and/or instructions by a processor. For example, the memory 120 may store program code executed to perform an operation of changing a set value of at least one control item for functions required for the user equipment 100 and the vehicle 200 to perform target tasks by sharing device information and/or computing resources, according to embodiments.

The AP 110 may control the user equipment 100 for wireless network-based communication.

In an embodiment, the AP 110 may execute a program and/or process stored in the memory 120 to perform an overall control operation on the user equipment 100. In an embodiment, a processor may be stored in the memory 120 as program code executed to perform an operation in which the user equipment 100 and the vehicle 200 share device information and/or computing resources to perform target tasks, according to embodiments, and the AP 110 may access the memory 120 to execute the stored program code to thereby control the user equipment 100 and the vehicle 200 to share device information and/or computing resources.

In the user equipment 100 and operating method thereof according to an embodiment, by sharing information and/or computing resources of each device between the user equipment 100 and an external electronic device (e.g., the vehicle 200), various data processing methods may be used without limitations, and based on this, target tasks may be processed to improve the overall performance of the device, e.g., the user equipment 100 and/or external electronic device.

FIG. 3 illustrates a method of performing a target task based on computing resource sharing between a user equipment and an external electronic device. FIG. 3 is a flowchart illustrating a method of performing a task based on computing resource sharing between the user equipment 100 and an external electronic device, according to an embodiment. FIG. 3 illustrates an embodiment of a method of performing a target task of the user equipment (UE) 100 by using computing resources of an external electronic device (e.g., the vehicle (VH) 200, from the perspective of each device.

In FIG. 3, the user equipment 100 performs wireless communication with the base station 300 by using any one of a terrestrial network and a non-terrestrial network, and the user equipment 100 and the vehicle 200 perform wired or wireless communication based on any one of 5G communication (NR) (e.g., FR1 band or FR2 band in 5G communication), 4G communication (LTE or LTE-A), UWB, Wi-Fi, Bluetooth, and USB, which allows high-speed data transmission between devices.

The user equipment 100, the vehicle 200, and the base station 300 of FIGS. 3 to 7 may correspond to the user equipment 100, the vehicle 200, and the base station 300 of FIGS. 1 and 2 described above.

Referring to FIG. 3, a method of performing a target task of the user equipment 100 by using computing resources of the vehicle 200 may include operations S110 to S190.

In operation S 110, the vehicle 200 may transmit a confirmation message regarding idle computing resources of the vehicle 200 to the user equipment 100. For example, the vehicle 200 may identify whether or not the amount of idle computing resources in at least one of the TCU 201 (in FIG. 1), the IVI 202 (in FIG. 1), and the ADAS 203 (in FIG. 1) in the vehicle 200 is equal to or greater than a threshold value. When the amount of the idle computing resources is equal to or greater than the threshold value, a confirmation message may be transmitted to the user equipment 100.

In operation S130, the user equipment 100 may obtain device information related to a target task of the user equipment 100 and transmit the same to the vehicle 200. For example, in response to receiving, from the vehicle 200, a confirmation message indicating that the amount of the idle computing resources of the vehicle 200 is equal to or greater than the threshold value, the user equipment 100 may transmit the device information about the user equipment 100 to the vehicle 200. Here, the target task of the user equipment 100 may be a data processing task based on an online learning operation and may include at least one task for improving and/or optimizing the performance of the user equipment 100. For example, the target task of the user equipment 100 may be a channel training task based on an online learning operation or a transmission/reception beamforming training task. Also, the device information about the user equipment 100 may be information obtained and/or measured through a modem of the user equipment 100 or a sensor of the user equipment 100 and may include at least one of measurement information about a state of a channel between the user equipment 100 and the base station 300 and measurement information about a beam received by the user equipment 100. For example, when the target task of the user equipment 100 is a channel training task, the user equipment 100 may transmit, to the vehicle 200, at least one of power amplitude information, channel model information, Doppler frequency information, signal-to-noise ratio (SNR) information, reference signal received power (RSRP) information, and reference signal received quality (RSRQ) information about the channel. For example, when the target task of the user equipment 100 is a beamforming training task, the user equipment 100 may transmit, to the vehicle 200, at least one of SNR information, RSRP information, RSRQ information, and paging measurement information about the received beam.

In operation S150, the vehicle 200 may allocate the device information to the idle computing resources of the vehicle 200. For example, the vehicle 200 may allocate an online learning task (e.g. a channel training task or a transmission/reception beamforming training task) regarding the device information to the idle computing resources of the vehicle 200 (e.g., the idle computing resources in at least one of the TCU 201 (in FIG. 1), the IVI 202 (in FIG. 1), and the ADAS 203 (in FIG. 1)).

In operation S 170, the vehicle 200 may transmit `first result data' regarding the device information, which is generated by using the idle computing resources of the vehicle 200, to the user equipment 100. For example, the vehicle 200 may generate first result data regarding the device information by using the idle computing resources of the vehicle 200 (e.g., the idle computing resources in at least one of the TCU 201 (in FIG. 1), the IVI 202 (in FIG. 1), and the ADAS 203 (in FIG. 1)) and transmit the generated first result data to the user equipment 100. Here, the first result data may include computation result data obtained by performing an online learning task on the device information.

In operation S190, the user equipment 100 may perform the target task of the user equipment 100 based on the first result data. For example, the user equipment 100 may complete a channel training task based on online learning result data (e.g., the first result data) based on channel state information, which is received from the vehicle 200. For example, the user equipment 100 may complete a beamforming training task based on online learning result data (e.g., the first result data) regarding beamforming state information, which is received from the vehicle 200.

FIG. 4 illustrates a method of performing a target task based on computing resource sharing between a user equipment and an external electronic device, according to an embodiment. FIG. 4 is a flowchart illustrating a method of performing a task based on computing resource sharing between the user equipment 100 and an external electronic device, according to an embodiment. FIG. 4 illustrates an embodiment of a method of performing a target task of an external electronic device (e.g., the vehicle (VH) 200 by using computing resources of the user equipment (UE) 100, from the perspective of each device.

In FIG. 4, the user equipment 100 performs wireless communication with the base station 300 by using any one of a terrestrial network and a non-terrestrial network, and the user equipment 100 and the vehicle 200 perform wired or wireless communication based on any one of 5G communication (NR) (e.g., FR1 band or FR2 band in 5G communication), 4G communication (LTE or LTE-A), UWB, Wi-Fi, Bluetooth, and USB, which allows high-speed data transmission between devices.

The user equipment 100, the vehicle 200, and the base station 300 of FIGS. 3 to 7 may correspond to the user equipment 100, the vehicle 200, and the base station 300 of FIGS. 1 and 2 described above.

Referring to FIG. 4, a method of performing a target task of the vehicle 200 by using computing resources of the user equipment 100 may include operations S210 to S290.

In operation S210, the user equipment 100 may transmit a confirmation message regarding idle computing resources of the user equipment 100 to the vehicle 200. For example, the user equipment 100 may identify whether or not the amount of idle computing resources in at least one of the CPU 111 (in FIG. 2), the GPU 112 (in FIG. 2), and the NPU 113 (in FIG. 2) in the user equipment 100 is equal to or greater than a threshold value. When the amount of the idle computing resources is equal to or greater than the threshold value, a confirmation message may be transmitted to the vehicle 200.

In operation S230, the vehicle 200 may obtain vehicle information related to a target task of the vehicle 200 and transmit the same to the user equipment 100. For example, in response to receiving, from the user equipment 100, a confirmation message indicating that the amount of the idle computing resources of the user equipment 100 is equal to or greater than the threshold value, the vehicle 200 may transmit the vehicle information to the user equipment 100. Here, the target task of the vehicle 200 may be a data processing task based on an online learning operation and may include at least one task for improving and/or optimizing the performance of the vehicle 200. For example, the target task of the vehicle 200 may include a training task for improving autonomous driving functions, based on an online learning operation. Also, the vehicle information may be information obtained and/or measured by various sensors included in the vehicle 200 and may include information required for training to improve autonomous driving functions, including measurement information about a distance between the vehicle 200 and another vehicle. For example, when the target task of the vehicle 200 is a training task for improving autonomous driving functions, the vehicle 200 may transmit information about surrounding road traffic conditions and measurement information about a distance between the vehicle 200 and another vehicle to the user equipment 100.

In operation S250, the user equipment 100 may allocate the vehicle information to the idle computing resources of the user equipment 100. For example, the user equipment 100 may allocate an online learning task regarding the vehicle information to the idle computing resources of the user equipment 100 (e.g., the idle computing resources in at least one of the CPU 111 (in FIG. 2), the GPU 112 (in FIG. 2), and the NPU 113 (in FIG. 2)).

In operation S270, the user equipment 100 may transmit `second result data' regarding the vehicle information, which is generated by using the idle computing resources of the user equipment 100, to the vehicle 200. For example, the user equipment 100 may generate second result data regarding the vehicle information by using the idle computing resources of the user equipment 100 (e.g., the idle computing resources in at least one of the CPU 111 (in FIG. 2), the GPU 112 (in FIG. 2), and the NPU 113 (in FIG. 2)) and transmit the generated second result data to the vehicle 200. Here, the second result data may include computation result data obtained by performing an online learning task on the vehicle information.

In operation S290, the vehicle 200 may perform the target task of the vehicle 200 based on the second result data. For example, the vehicle 200 may complete a training task for improving autonomous driving functions based on online learning result data (e.g., the second result data) received from the user equipment 100.

FIG. 5 illustrates a method of performing a target task based on computing resource sharing between a user equipment and an external electronic device, according to an embodiment. FIG. 5 is a flowchart illustrating a method of performing a task based on computing resource sharing between the user equipment 100 and an external electronic device, according to an embodiment. FIG. 5 illustrates an embodiment of a method of performing a target task of the user equipment (UE) 100 by using a portion of computing resources of an external electronic device (e.g., the vehicle (VH) 200 and a portion of computing resources of the user equipment 100, from the perspective of each device.

In FIG. 5, the user equipment 100 performs wireless communication with the base station 300 by using any one of a terrestrial network and a non-terrestrial network, and the user equipment 100 and the vehicle 200 perform wired or wireless communication based on any one of 5G communication (NR) (e.g., FR1 band or FR2 band in 5G communication), 4G communication (LTE or LTE-A), UWB, Wi-Fi, Bluetooth, and USB, which allows high-speed data transmission between devices.

The user equipment 100, the vehicle 200, and the base station 300 of FIGS. 3 to 7 may correspond to the user equipment 100, the vehicle 200, and the base station 300 of FIGS. 1 and 2 described above.

Referring to FIG. 5, a method of performing a target task of the user equipment 100 by using a portion of computing resources of the vehicle 200 and a portion of computing resources of the user equipment 100 in the user equipment 100 may include operations S310 to S390.

In operation S310, the vehicle 200 may transmit a confirmation message regarding idle computing resources of the vehicle 200 to the user equipment 100. For example, the vehicle 200 may identify whether or not the amount of idle computing resources in at least one of the TCU 201 (in FIG. 1), the IVI 202 (in FIG. 1), and the ADAS 203 (in FIG. 1) in the vehicle 200 is equal to or greater than a threshold value. When the amount of the idle computing resources is equal to or greater than the threshold value, a confirmation message may be transmitted to the user equipment 100.

In operation S330, the user equipment 100 may obtain a portion of device information related to a target task of the user equipment 100 and transmit the same to the vehicle 200. For example, in response to receiving, from the vehicle 200, a confirmation message indicating that the amount of the idle computing resources of the vehicle 200 is equal to or greater than the threshold value, the user equipment 100 may transmit the portion of the device information about the user equipment 100 to the vehicle 200. Here, the target task of the user equipment 100 may be a data processing task based on an online learning operation and may include at least one task for improving and/or optimizing the performance of the user equipment 100. For example, the target task of the user equipment 100 may be a channel training task based on an online learning operation or a transmission/reception beamforming training task. Also, the portion of the device information about the user equipment 100 may be a portion of information obtained and/or measured by a modem of the user equipment 100 or a sensor of the user equipment 100 and may include a portion of at least one of measurement information about a state of a channel between the user equipment 100 and the base station 300 and measurement information about a beam received by the user equipment 100. For example, when the target task of the user equipment 100 is a channel training task, the user equipment 100 may transmit, to the vehicle 200, a portion of at least one of power amplitude information, channel model information, Doppler frequency information, SNR information, RSRP information, and RSRQ information about the channel. For example, when the target task of the user equipment 100 is a beamforming training task, the user equipment 100 may transmit, to the vehicle 200, a portion of at least one of SNR information, RSRP information, RSRQ information, and paging measurement information about the received beam.

In operation S340, the user equipment 100 may allocate the remaining device information related to the target task of the user equipment 100 to idle computing resources of the user equipment 100. For example, the user equipment 100 may allocate an online learning task regarding the remaining device information to the idle computing resources of the user equipment 100 (e.g., idle computing resources in at least one of the CPU 111 (in FIG. 2), the GPU 112 (in FIG. 2), and the NPU 113 (in FIG. 2)).

In operation S345, the user equipment 100 may generate `third result data' regarding the remaining device information by using the idle computing resources of the user equipment 100. For example, the user equipment 100 may generate third result data regarding the remaining device information by using the idle computing resources of the user equipment 100 (e.g., the idle computing resources in at least one of the CPU 111 (in FIG. 2), the GPU 112 (in FIG. 2), and the NPU 113 (in FIG. 2)). Here, the third result data may include computation result data obtained by performing an online learning task on the remaining device information.

In operation S350, the vehicle 200 may allocate the portion of the device information related to the target task of the user equipment 100 to the idle computing resources of the vehicle 200. For example, the vehicle 200 may allocate an online learning task regarding the portion of the device information to the idle computing resources of the vehicle 200 (e.g., the idle computing resources in at least one of the TCU 201 (in FIG. 1), the IVI 202 (in FIG. 1), and the ADAS 203 (in FIG. 1)).

In operation S370, the vehicle 200 may transmit 'fourth result data' regarding the portion of the device information, which is generated by using the idle computing resources of the vehicle 200, to the user equipment 100. For example, the vehicle 200 may generate fourth result data regarding the portion of the device information by using the idle computing resources of the vehicle 200 (e.g., the idle computing resources in at least one of the TCU 201 (in FIG. 1), the IVI 202 (in FIG. 1), and the ADAS 203 (in FIG. 1)) and transmit the generated fourth result data to the user equipment 100. Here, the fourth result data may include computation result data obtained by performing an online learning task on the remaining device information.

In operation S390, the user equipment 100 may perform the target task of the user equipment 100 based on the third result data and the fourth result data. For example, the user equipment 100 may complete a channel training task or a beamforming training task based on a portion of online learning result data (e.g., the third result data) generated by using the idle computing resources of the user equipment 100 and a portion of online learning result data (e.g., the fourth result data) generated by using the idle computing resources of the vehicle 200.

In FIG. 5, result data (e.g., the fourth result data) of the vehicle 200 is generated after result data (e.g., the third result data) of the user equipment 100 is generated, but embodiments of the disclosure are not limited thereto. A device and method according to an embodiment may include an embodiment in which result data of the user equipment 100 is generated after result data of the vehicle 200 is generated, depending on user settings or the function/purpose of the device.

FIG. 6 illustrates a method of performing a target task based on computing resource sharing between a user equipment and an external electronic device, according to an embodiment. FIG. 6 is a flowchart illustrating a method of performing a task based on computing resource sharing between the user equipment 100 and an external electronic device, according to an embodiment. FIG. 6 illustrates an embodiment of a method of performing a target task of an external electronic device (e.g., the vehicle (VH) 200 by using a portion of computing resources of the external electronic device (e.g., the vehicle 200) and a portion of computing resources of the user equipment (UE) 100, from the perspective of each device.

In FIG. 6, the user equipment 100 performs wireless communication with the base station 300 by using any one of a terrestrial network and a non-terrestrial network, and the user equipment 100 and the vehicle 200 perform wired or wireless communication based on any one of 5G communication (NR) (e.g., FR1 band or FR2 band in 5G communication), 4G communication (LTE or LTE-A), UWB, Wi-Fi, Bluetooth, and USB, which allows high-speed data transmission between devices.

The user equipment 100, the vehicle 200, and the base station 300 of FIGS. 3 to 7 may correspond to the user equipment 100, the vehicle 200, and the base station 300 of FIGS. 1 and 2 described above.

Referring to FIG. 6, a method of performing a target task of the vehicle 200 by using a portion of computing resources of the vehicle 200 and a portion of computing resources of the user equipment 100 in the user equipment 100 may include operations S410 to S490.

In operation S410, the user equipment 100 may transmit a confirmation message regarding idle computing resources of the user equipment 100 to the vehicle 200. For example, the user equipment 100 may identify whether or not the amount of idle computing resources in at least one of the CPU 111 (in FIG. 2), the GPU 112 (in FIG. 2), and the NPU 113 (in FIG. 2) in the user equipment 100 is equal to or greater than a threshold value. When the amount of the idle computing resources is equal to or greater than the threshold value, a confirmation message may be transmitted to the vehicle 200.

In operation S430, the vehicle 200 may obtain a portion of vehicle information related to a target task of the vehicle 200 and transmit the same to the user equipment 100. For example, in response to receiving, from the user equipment 100, a confirmation message indicating that the amount of the idle computing resources of the user equipment 100 is equal to or greater than the threshold value, the vehicle 200 may transmit the portion of the vehicle information to the user equipment 100. Here, the target task of the vehicle 200 may be a data processing task based on an online learning operation and may include at least one task for improving and/or optimizing the performance of the vehicle 200. For example, the target task of the vehicle 200 may include a training task for improving autonomous driving functions, based on an online learning operation. Also, the vehicle information may be information obtained and/or measured by various sensors included in the vehicle 200 and may include various information required for training to improve autonomous driving functions, including measurement information about a distance between the vehicle 200 and another vehicle. For example, when the target task of the vehicle 200 is a training task for improving autonomous driving functions, the vehicle 200 may transmit information about surrounding road traffic conditions and measurement information about a distance between the vehicle 200 and another vehicle to the user equipment 100.

In operation S440, the vehicle 200 may allocate the remaining vehicle information related to the target task of the vehicle 200 to idle computing resources of the vehicle 200. For example, the vehicle 200 may allocate an online learning task regarding the remaining vehicle information to the idle computing resources of the vehicle 200 (e.g., idle computing resources in at least one of the TCU 201 (in FIG. 1), the IVI 202 (in FIG. 1), and the ADAS 203 (in FIG. 1)).

In operation S445, the vehicle 200 may generate `fifth result data' regarding the remaining vehicle information by using the idle computing resources of the vehicle 200. For example, the vehicle 200 may generate fifth result data regarding the remaining vehicle information by using the idle computing resources of the vehicle 200 (e.g., the idle computing resources in at least one of the TCU 201 (in FIG. 1), the IVI 202 (in FIG. 1), and the ADAS 203 (in FIG. 1)). Here, the fifth result data may include computation result data obtained by performing an online learning task on the remaining vehicle information related to the target task of the vehicle 200.

In operation S450, the user equipment 100 may allocate the portion of the vehicle information related to the target task of the vehicle 200 to the idle computing resources of the user equipment 100. For example, the user equipment 100 may allocate an online learning task regarding the portion of the vehicle information to the idle computing resources of the user equipment 100 (e.g., the idle computing resources in at least one of the CPU 111 (in FIG. 2), the GPU 112 (in FIG. 2), and the NPU 113 (in FIG. 2)).

In operation S470, the user equipment 100 may transmit 'sixth result data' regarding the portion of the vehicle information, which is generated by using the idle computing resources of the user equipment 100, to the vehicle 200. For example, the user equipment 100 may generate sixth result data regarding the portion of the vehicle information by using the idle computing resources of the user equipment 100 (e.g., the idle computing resources in at least one of the CPU 111 (in FIG. 2), the GPU 112 (in FIG. 2), and the NPU 113 (in FIG. 2)) and transmit the generated sixth result data to the vehicle 200. Here, the sixth result data may include computation result data obtained by performing an online learning task on the portion of the vehicle information related to the target task of the vehicle 200.

In operation S490, the vehicle 200 may perform the target task of the vehicle 200 based on the fifth result data and the sixth result data. For example, the vehicle 200 may complete a training task for improving autonomous driving functions based on a portion of online learning result data (e.g., the fifth result data) generated by using the idle computing resources of the user equipment 100 and a portion of online learning result data (e.g., the sixth result data) generated by using the idle computing resources of the vehicle 200.

In FIG. 6, result data (e.g., the sixth result data) of the user equipment 100 is generated after result data (e.g., the fifth result data) of the vehicle 200 is generated, but embodiments of the disclosure are not limited thereto. A device and method according to an embodiment may include an embodiment in which result data of the vehicle 200 is generated after result data of the user equipment 100 is generated, depending on user settings or the function/purpose of the device.

FIG. 7 illustrates a method of performing a target task based on information sharing between a user equipment and an external electronic device, according to an embodiment. FIG. 7 is a flowchart illustrating a method of performing a task based on information sharing between the user equipment 100 and an external electronic device, according to an embodiment. FIG. 7 illustrates an embodiment of a method of performing a target task (e.g., a task for improving and/or optimizing device-specific performance) of the user equipment (UE) 100 or an external electronic device (e.g., the vehicle (VH) 200) by sharing information about the external electronic device (e.g., the vehicle 200) and information about the user equipment 100, from the perspective of each device.

In FIG. 7, the user equipment 100 performs wireless communication with the base station 300 by using any one of a terrestrial network and a non-terrestrial network, and the user equipment 100 and the vehicle 200 perform wired or wireless communication based on any one of 5G communication (NR) (e.g., FR1 band or FR2 band in 5G communication), 4G communication (LTE or LTE-A), UWB, Wi-Fi, Bluetooth, and USB, which allows high-speed data transmission between devices.

The user equipment 100, the vehicle 200, and the base station 300 of FIGS. 3 to 7 may correspond to the user equipment 100, the vehicle 200, and the base station 300 of FIGS. 1 and 2 described above.

Referring to FIG. 7, a method of performing a target task of each of an external electronic device (e.g., the vehicle 200) and the user equipment 100 by sharing information about the external electronic device (e.g., the vehicle 200) and information about the user equipment 100 may include operations S510 to S570.

In operation S510, the user equipment 100 may obtain information measured by the user equipment 100 and transmit the same to the vehicle 200. Here, the information measured by the user equipment 100 may be information sensed by a sensor included in the user equipment 100 and/or may include information required for a target task of the vehicle 200. The target task of the vehicle 200 may be at least one task for improving the performance of the vehicle 200 (e.g., a task for improving autonomous driving functions). For example, the target task of the vehicle 200 may include a data processing task based on an online learning operation. Alternatively, the target task of the vehicle 200 may include data processing tasks based on various methods other than online learning operations.

In operation S530, the vehicle 200 may obtain information measured by the vehicle 200 and transmit the same to the user equipment 100. Here, the information measured by the vehicle 200 may be information sensed by a sensor included in the vehicle 200 and/or may include information required for at least one task (e.g., a transmission/reception beam selection task or a channel model selection task) to improve the performance of the user equipment 100. For example, the target task of the user equipment 100 may include a data processing task based on an online learning operation. Alternatively, the target task of the user equipment 100 may include data processing tasks based on various methods other than online learning operations. The vehicle 200 may transmit, to the user equipment 100, information about a direction of movement of the vehicle 200, a speed of movement of the vehicle 200, and a location of the vehicle 200, as information measured based on at least one sensor included in the vehicle 200.

In operation S550, the user equipment 100 may perform the target task of the user equipment 100 based on the information measured by the vehicle 200.

In an embodiment, the user equipment 100 may predict a location to which the user equipment 100 moves, based on the information measured by the vehicle 200 (e.g., the information about the direction of movement of the vehicle 200 and the information about the speed of movement of the vehicle 200), and perform a task of selecting a transmission/reception beam that ensures an optimal channel environment at the predicted location.

In an embodiment, the user equipment 100 may perform a task of selecting a channel model and characteristics of the channel model that ensure an optimal channel environment at the location of the vehicle 200 (here, the location of the vehicle 200 may correspond to be the location of the user equipment 100), based on the information measured by the vehicle 200 (e.g., the information about the direction of movement of the vehicle 200 and the information about the speed of movement of the vehicle 200). For example, the channel model may include an `extended pedestrian A' (EPA) model, an `extended vehicular A' (EVA) model, and an `extended typical urban' (ETU) model, and the characteristics of the channel model may be selected (or determined) based on the speed of movement of the vehicle 200.

In operation S570, the vehicle 200 may perform the target task of the vehicle 200 based on the information measured by the user equipment 100. For example, the vehicle 200 may predict a location to which the vehicle 200 is to move, based on the information measured by the user equipment 100 (e.g., information about a direction of movement of the user equipment 100 and information about a speed of movement of the user equipment 100), and may calculate a distance to another vehicle present around the predicted location to thereby select a driving mode.

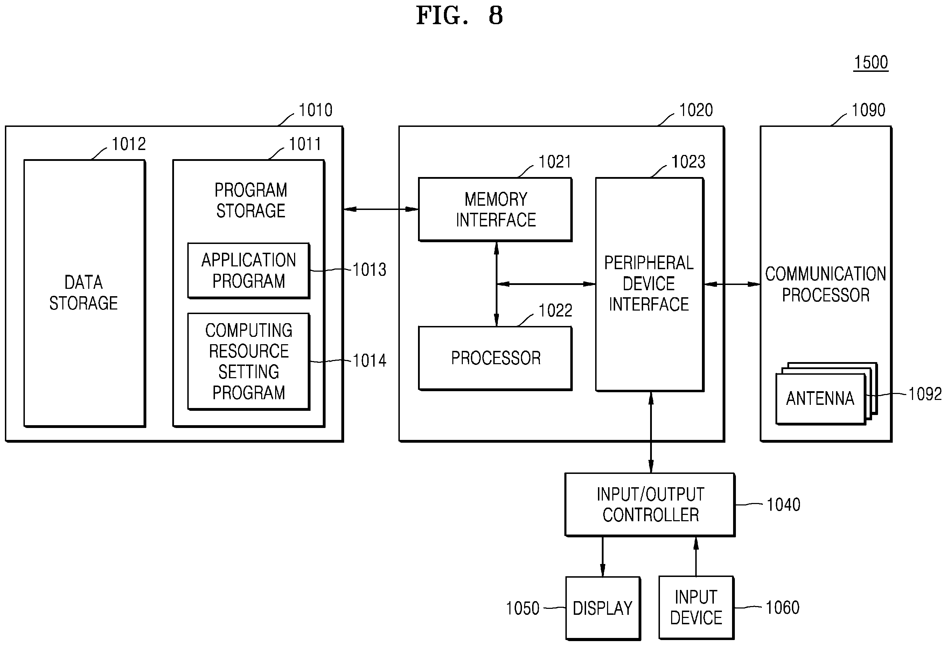

FIG. 8 is a block diagram illustrating an electronic device 1500 according to an embodiment. The electronic device 1500 of FIG. 8 may correspond to the user equipment 100 of FIGS. 1 to 7.

Referring to FIG. 8, the electronic device 1500 may include a memory 1010, a processor block 1020, an input/output controller 1040, a display 1050, an input device 1060, and a communication processor 1090. Here, a plurality of memories 1010 may be provided. Each element will be described below.

The memory 1010 may include a program storage 1011 that stores a program for controlling an operation of the electronic device 1500, and a data storage 1012 that stores data generated during execution of the program. The data storage 1012 may store data required for operations of an application program 1013 and a computing resource setting program 1014. The program storage 1011 may include the application program 1013 and the computing resource setting program 1014. Here, a program included in the program storage 1011 may be a set of instructions and may be expressed as an instruction set.

The application program 1013 includes an application program operating in the electronic device 1500. That is, the application program 1013 may include instructions of an application driven by a processor 1022. The computing resource setting program 1014 may adaptively control functions of the electronic device 1500 to share computing resources between the electronic device 1500 and an external electronic device (e.g., the vehicle 200 in FIGS. 1 to 7), according to embodiments. For example, the computing resource setting program 1014 may control the functions of the electronic device 1500 to perform a target task of the electronic device 1500 by using computing resources of the external electronic device (e.g., the vehicle 200 in FIGS. 1 to 7). For example, the computing resource setting program 1014 may control the functions of the electronic device 1500 to perform a target task of the external electronic device (e.g., the vehicle 200 in FIGS. 1 to 7) by using computing resources of the electronic device 1500. For example, the computing resource setting program 1014 may control the functions of the electronic device 1500 to perform a target task of the electronic device 1500 by using a portion of computing resources of the electronic device 1500 and a portion of computing resources of the external electronic device (e.g., the vehicle 200 in FIGS. 1 to 7). For example, the computing resource setting program 1014 may control the functions of the electronic device 1500 to perform a target task of the electronic device 1500 by sharing information about the electronic device 1500 and information about the external electronic device (e.g., the vehicle 200 in FIGS. 1 to 7).

A peripheral device interface 1023 may control connection between an input/output peripheral device of the base station 300, the processor 1022, and a memory interface 1021. The processor 1022 controls the base station 300 to provide a corresponding service by using at least one software program. Here, the processor 1022 may execute at least one program stored in the memory 1010 to provide a service corresponding to the program.

The input/output controller 1040 may provide an interface between an input/output device, such as the display 1050 and the input device 1060, and the peripheral device interface 1023. The display 1050 displays status information, input characters, moving pictures, still pictures, and the like. For example, the display 1050 may display information about an application program driven by the processor 1022.

The input device 1060 may provide input data generated by selection of the electronic device 1500 to the processor block 1020 through the input/output controller 1040. Here, the input device 1060 may include a keypad including at least one hardware button and a touch pad for sensing touch information. For example, the input device 1060 may provide touch information, such as a touch, a touch movement, and a touch release, sensed through a touch pad, to the processor 1022 through the input/output controller 1040. The electronic device 1500 may include the communication processor 1090 that performs communication functions for voice communication and data communication. The communication processor 1090 may include a modem including an antenna 1092 that performs various functions (e.g. a cell search function, a cell measurement function, a handover function, etc.) for connecting to a wireless network to perform various wireless communications, according to embodiments.

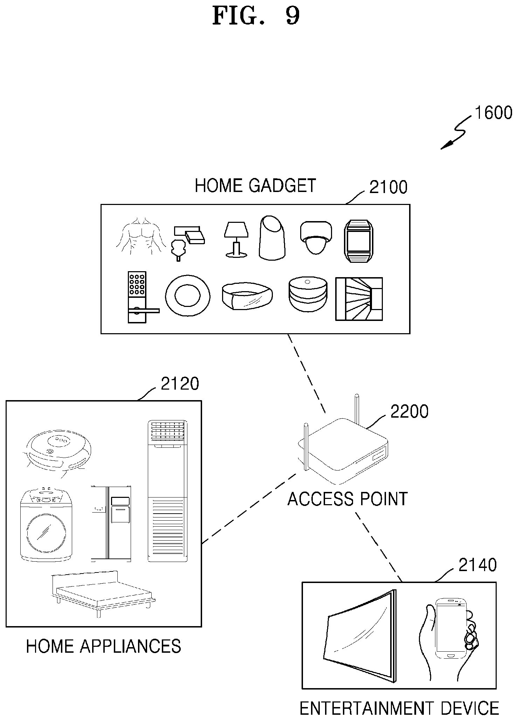

FIG. 9 is a diagram illustrating electronic devices 1600 including computing resources, according to an embodiment.

In FIG. 9, a home gadget 2100, a home appliance 2120, and an entertainment device 2140 are electronic devices including at least one computation processor (e.g., a CPU, a GPU, or an NPU), and that an electronic device (e.g., the user equipment 100) according to an embodiment is capable of performing a communication connection with at least one of the home gadget 2100, the home appliance 2120, and the entertainment device 2140.

Referring to FIG. 9, a controller of the electronic device (e.g., the user equipment 100), according to an embodiment, may perform a target task of the electronic device (e.g., the user equipment 100) by using idle computing resources of at least one of the home gadget 2100, the home appliance 2120, and the entertainment device 2140, through communication with controllers or processors of the home gadget 2100, home appliance 2120, and entertainment device 2140. Also, the controller of the electronic device (e.g., the user equipment 100), according to an embodiment, may perform a target task of the electronic device (e.g., the user equipment 100) based on device information received from the home gadget 2100, the home appliance 2120, and the entertainment device 2140, through communication with the controllers or processors of the home gadget 2100, home appliance 2120, and entertainment device 2140. In some embodiments, the home gadget 2100, the home appliance 2120, the entertainment device 2140, and an access point 2200 may constitute an Internet of Things (IoT) network system. The electronic devices 1600 illustrated in FIG. 9 are only examples, and the above embodiments may be applied to other electronic devices.

While the disclosure has been particularly shown and described with reference to embodiments thereof, various changes in form and details may be made therein without departing from the scope of the following claims.

Embodiments are set out in the following clauses:
Clause 1: A user equipment comprising:
   a communication circuit configured to perform a communication connection with an external electronic device;
   at least one processor; and
   a memory configured to store instructions executed during operations of the at least one processor,
   wherein the at least one processor is configured to:
      control the communication circuit to transmit, to the external electronic device, device information related to a first target task of the user equipment; and
      in response to receiving, from the external electronic device, first result data generated by using computing resources of the external electronic device, perform the first target task, based on the first result data, and
   wherein the first result data is generated based on the device information allocated to the computing resources of the external electronic device.
Clause 2: The user equipment of clause 1, wherein the at least one processor is further configured to, in response to receiving, from the external electronic device, a confirmation message indicating that an amount of idle computing resources of the external electronic device is equal to or greater than a threshold value, control the communication circuit to transmit the device information about the user equipment to the external electronic device, and
   wherein the first target task is a data processing task based on an online learning operation.
Clause 3: The user equipment of clause 1 or 2, wherein the at least one processor is further configured to:
   control the communication circuit to receive information measured by the external electronic device; and
   perform a second target task of the user equipment, based on the information measured by the external electronic device,
   wherein the information measured by the external electronic device comprises at least one of information about a direction of movement of the external electronic device, a speed of movement of the external electronic device, and a location of the external electronic device, and
   wherein the second target task comprises at least one task for improving device performance in the user equipment.
Clause 4: The user equipment of clause 3, wherein, to perform the second target task, the at least one processor is further configured to:
   predict a location to which the user equipment moves, based on the information measured by the external electronic device; and
   perform a task of selecting a transmission/reception beam that ensures an optimal channel environment at the predicted location.
Clause 5: The user equipment of clause 3 or 4, wherein, to perform the second target task, the at least one processor is further configured to perform a task of selecting a channel model and characteristics of the channel model that ensure an optimal channel environment at the location of the external electronic device, based on the information measured by the external electronic device.
Clause 6: The user equipment of clause 5, wherein the channel model comprises at least one of an extended pedestrian A (EPA) model, an extended vehicular A (EVA) model, and an extended typical urban (ETU) model.
Clause 7: The user equipment of any preceding clause, wherein the at least one processor is further configured to:
   control the communication circuit to receive, from the external electronic device, information related to a target task of the external electronic device;
   allocate the information related to the target task of the external electronic device to computing resources of the user equipment;
   generate second result data based on the information related to the target task of the external electronic device by using the computing resources of the user equipment; and
   control the communication circuit to transmit the second result data to the external electronic device.
Clause 8: The user equipment of any preceding clause, wherein the at least one processor is further configured to:
   control the communication circuit to transmit, to the external electronic device, a portion of the device information related to the first target task of the user equipment;
   generate, by using computing resources of the user equipment, third result data based on the remaining device information related to the first target task of the user equipment; and
   in response to receiving, from the external electronic device, fourth result data generated by using the computing resources of the external electronic device, perform the first target task by using the third result data and the fourth result data, and
   wherein the fourth result data is generated based on the portion of the device information, which is allocated to the computing resources of the external electronic device.
Clause 9: The user equipment of any preceding clause,
   wherein the device information comprises at least one of first measurement information about a state of a channel between the user equipment and a base station and second measurement information about a beam received by the user equipment,
   wherein the first result data comprises data generated by using idle computing resources of at least one of a telematic controller (TCU), an in-external electronic device infotainment (IVI), and an advanced driver assistance system (ADAS), of the external electronic device, and
   wherein the user equipment is configured to perform a wireless communication connection with a base station by using at least one of a terrestrial network and a non-terrestrial network.
Clause 10: A method performed by a user equipment, the method comprising:
   transmitting, to an external electronic device, device information related to a first target task of the user equipment; and
   in response to receiving, from the external electronic device, first result data generated by using computing resources of the external electronic device, performing the first target task, based on the first result data,
   wherein the first result data is generated based on the device information allocated to the computing resources of the external electronic device.
Clause 11: The method of clause 10, wherein the transmitting of the device information to the external electronic device comprises, in response to receiving, from the external electronic device, a confirmation message indicating that an amount of idle computing resources of the external electronic device is equal to or greater than a threshold value, transmitting the device information to the external electronic device, and
   wherein the first target task is a data processing task based on an online learning operation.
Clause 12: The method of clause 10 or 11, further comprising:
   receiving information measured by the external electronic device; and
   performing a second target task of the user equipment, based on information measured by the external electronic device,
   wherein the information measured by the external electronic device comprises at least one of information about a direction of movement of the external electronic device, a speed of movement of the external electronic device, and a location of the external electronic device, and
   wherein the second target task comprises at least one task for improving device performance in the user equipment.
Clause 13: The method of any of clauses 10 to 12, further comprising:
   receiving, from the external electronic device, information related to a target task of the external electronic device;
   allocating the information related to the target task of the external electronic device to computing resources of the user equipment;
   generating, by using the computing resources of the user equipment, second result data based on the information related to the target task of the external electronic device; and
   transmitting the second result data to the external electronic device.
Clause 14: The method of any of clauses 10 to 13, further comprising:
   transmitting, to the external electronic device, a portion of the device information related to the first target task of the user equipment;
   generating, by using the computing resources of the user equipment, third result data based on the remaining device information related to the first target task of the user equipment; and
   in response to receiving, from the external electronic device, fourth result data generated by using the computing resources of the external electronic device, performing the first target task by using the third result data and the fourth result data,
   wherein the fourth result data is generated based on the portion of the device information, allocated to the computing resources of the external electronic device.
Clause 15: A method performed by a wireless communication system, the method comprising:
   transmitting, to an external electronic device, first data related to a target task of a user equipment;
   transmitting, to the user equipment, second data related to a target task of the external electronic device;
   performing the target task of the user equipment, based on first computation result data received from the external electronic device; and
   performing the target task of the external electronic device, based on second computation result data received from the user equipment,
   wherein the first computation result data is generated by using computing resources of the external electronic device, based on the first data, and
   wherein the second computation result data is generated by using computing resources of the user equipment, based on the second data.

## Claims

1. A user equipment comprising:
a communication circuit configured to perform a communication connection with an external electronic device;
at least one processor; and
a memory configured to store instructions executed during operations of the at least one processor,
wherein the at least one processor is configured to:
control the communication circuit to transmit, to the external electronic device, device information related to a first target task of the user equipment; and
in response to receiving, from the external electronic device, first result data generated by using computing resources of the external electronic device, perform the first target task, based on the first result data, and
wherein the first result data is generated based on the device information allocated to the computing resources of the external electronic device.

2. The user equipment of claim 1, wherein the at least one processor is further configured to, in response to receiving, from the external electronic device, a confirmation message indicating that an amount of idle computing resources of the external electronic device is equal to or greater than a threshold value, control the communication circuit to transmit the device information about the user equipment to the external electronic device, and/or
wherein the first target task is a data processing task based on an online learning operation.

3. The user equipment of claim 1 or 2, wherein the at least one processor is further configured to:
control the communication circuit to receive information measured by the external electronic device; and
perform a second target task of the user equipment, based on the information measured by the external electronic device,
wherein the information measured by the external electronic device comprises at least one of information about a direction of movement of the external electronic device, a speed of movement of the external electronic device, and a location of the external electronic device, and
wherein the second target task comprises at least one task for improving device performance in the user equipment.

4. The user equipment of claim 3, wherein, to perform the second target task, the at least one processor is further configured to:
predict a location to which the user equipment moves, based on the information measured by the external electronic device; and
perform a task of selecting a transmission/reception beam that ensures an optimal channel environment at the predicted location.

5. The user equipment of claim 3 or 4, wherein, to perform the second target task, the at least one processor is further configured to perform a task of selecting a channel model and characteristics of the channel model that ensure an optimal channel environment at the location of the external electronic device, based on the information measured by the external electronic device.

6. The user equipment of claim 5, wherein the channel model comprises at least one of an extended pedestrian A (EPA) model, an extended vehicular A (EVA) model, and an extended typical urban (ETU) model.

7. The user equipment of any preceding claim, wherein the at least one processor is further configured to:
control the communication circuit to receive, from the external electronic device, information related to a target task of the external electronic device;
allocate the information related to the target task of the external electronic device to computing resources of the user equipment;
generate second result data based on the information related to the target task of the external electronic device by using the computing resources of the user equipment; and
control the communication circuit to transmit the second result data to the external electronic device.

8. The user equipment of any preceding claim, wherein the at least one processor is further configured to:
control the communication circuit to transmit, to the external electronic device, a portion of the device information related to the first target task of the user equipment;
generate, by using computing resources of the user equipment, third result data based on the remaining device information related to the first target task of the user equipment; and
in response to receiving, from the external electronic device, fourth result data generated by using the computing resources of the external electronic device, perform the first target task by using the third result data and the fourth result data, and
wherein the fourth result data is generated based on the portion of the device information, which is allocated to the computing resources of the external electronic device.

9. The user equipment of any preceding claim, wherein at least one of:
the device information comprises at least one of first measurement information about a state of a channel between the user equipment and a base station and second measurement information about a beam received by the user equipment,
the first result data comprises data generated by using idle computing resources of at least one of a telematic controller (TCU), an in-external electronic device infotainment (IVI), and an advanced driver assistance system (ADAS), of the external electronic device, and
the user equipment is configured to perform a wireless communication connection with a base station by using at least one of a terrestrial network and a non-terrestrial network.

10. A method performed by a user equipment, the method comprising:
transmitting, to an external electronic device, device information related to a first target task of the user equipment; and
in response to receiving, from the external electronic device, first result data generated by using computing resources of the external electronic device, performing the first target task, based on the first result data,
wherein the first result data is generated based on the device information allocated to the computing resources of the external electronic device.

11. The method of claim 10, wherein the transmitting of the device information to the external electronic device comprises, in response to receiving, from the external electronic device, a confirmation message indicating that an amount of idle computing resources of the external electronic device is equal to or greater than a threshold value, transmitting the device information to the external electronic device, and/or
wherein the first target task is a data processing task based on an online learning operation.

12. The method of claim 10 or 11, further comprising:
receiving information measured by the external electronic device; and
performing a second target task of the user equipment, based on information measured by the external electronic device,
wherein the information measured by the external electronic device comprises at least one of information about a direction of movement of the external electronic device, a speed of movement of the external electronic device, and a location of the external electronic device, and
wherein the second target task comprises at least one task for improving device performance in the user equipment.

13. The method of any of claims 10 to 12, further comprising:
receiving, from the external electronic device, information related to a target task of the external electronic device;
allocating the information related to the target task of the external electronic device to computing resources of the user equipment;
generating, by using the computing resources of the user equipment, second result data based on the information related to the target task of the external electronic device; and
transmitting the second result data to the external electronic device.

14. The method of any of claims 10 to 13, further comprising:
transmitting, to the external electronic device, a portion of the device information related to the first target task of the user equipment;
generating, by using the computing resources of the user equipment, third result data based on the remaining device information related to the first target task of the user equipment; and
in response to receiving, from the external electronic device, fourth result data generated by using the computing resources of the external electronic device, performing the first target task by using the third result data and the fourth result data,
wherein the fourth result data is generated based on the portion of the device information, allocated to the computing resources of the external electronic device.

15. A method performed by a wireless communication system, the method comprising:
transmitting, to an external electronic device, first data related to a target task of a user equipment;
transmitting, to the user equipment, second data related to a target task of the external electronic device;
performing the target task of the user equipment, based on first computation result data received from the external electronic device; and
performing the target task of the external electronic device, based on second computation result data received from the user equipment,
wherein the first computation result data is generated by using computing resources of the external electronic device, based on the first data, and
wherein the second computation result data is generated by using computing resources of the user equipment, based on the second data.
